# EUROPEAN PATENT APPLICATION

(11) **EP 1 632 880 A1**
(43) Date of publication of application: **08.03.2006**
(21) Application number: 05102115.2
(22) Date of filing: 17.03.2005
(51) Int. Cl.: G06K 1/00, B60C 3/04

(54) **Transmitter for tire condition monitoring apparatus and antenna for the transmitter**

(30) Priority: 01.09.2004 JP 2004254406
(71) Applicant: Pacific Industrial Co., Ltd., Ogaki-shi, Gofu-ken 503-8063 (JP)
(72) Inventor: KATOU, Michiya, 503-8603, Gifu-ken (JP); IBUKA, Takashi, 503-8603, Gifu-ken (JP)
(74) Representative: Michalski, Stefan

(57) **Abstract**

A transmitter for a tire condition monitoring apparatus includes a circuit board, circuit components mounted on a main surface of the circuit board, and a transmission antenna that transmits a transmission signal as radio waves. The transmission antenna includes a loop shaped transmission conductor that transmits radio waves. The transmission conductor has a loop plane that is substantially perpendicular to the main surface of the circuit board. When the transmitter is attached to the wheel, the loop plane is substantially perpendicular to a portion of the circumferential surface of the wheel that faces the transmitter. As a result, when the transmitter is attached to the wheel, the radio wave transmission efficiency is effectively prevented from being reduced.

## Description

### BACKGROUND OF THE INVENTION

The present invention relates to a transmitter for a tire condition monitoring apparatus and an antenna suitably used in the transmitter.

Wireless tire condition monitoring apparatuses that allow a driver in a vehicle passenger compartment to check the conditions of vehicle tires have been proposed. One such monitoring apparatus includes transmitters and a receiver. Each transmitter is attached to a vehicle wheel to be located in the corresponding tire, and the receiver is located in the body frame of the vehicle. Each transmitter detects the condition of the associated tire, such as the internal pressure and the internal temperature, and wirelessly transmits a signal including data that represents the detected tire condition as radio waves through a transmission antenna. The receiver receives the radio waves from the transmitter through a reception antenna, and displays the condition of the tire on a display located in the passenger compartment as necessary.

As a transmission antenna for such a transmitter, Japanese Laid-Open Patent Publication No. 2003-347811 discloses a loop antenna 101 as shown in Fig. 15. As shown in Fig. 15, the loop antenna 101 is provided on a main surface 102a of a circuit board 102. Although not illustrated, a pressure sensor for detecting the internal pressure of a tire and a transmission circuit for generating a transmission signal are mounted on the main surface 102a. The transmitter is attached to a vehicle wheel such that the circuit board 102 lies along the outer circumference of the wheel rim. The main surface 102a is substantially parallel to part of the outer circumference of the wheel rim that faces the transmitter.

The loop antenna 101 is formed by bending a belt-shaped conductor into a rectangular frame. The loop antenna 101 includes a transmitting portion 101a and support portions 101b provided at the ends of the transmitting portion 101a. A space exists between the transmitting portion 101a and the main surface 102a of the circuit board 102. The support portions 101b are fixed to the main surface 102a and function as feeding electrodes.

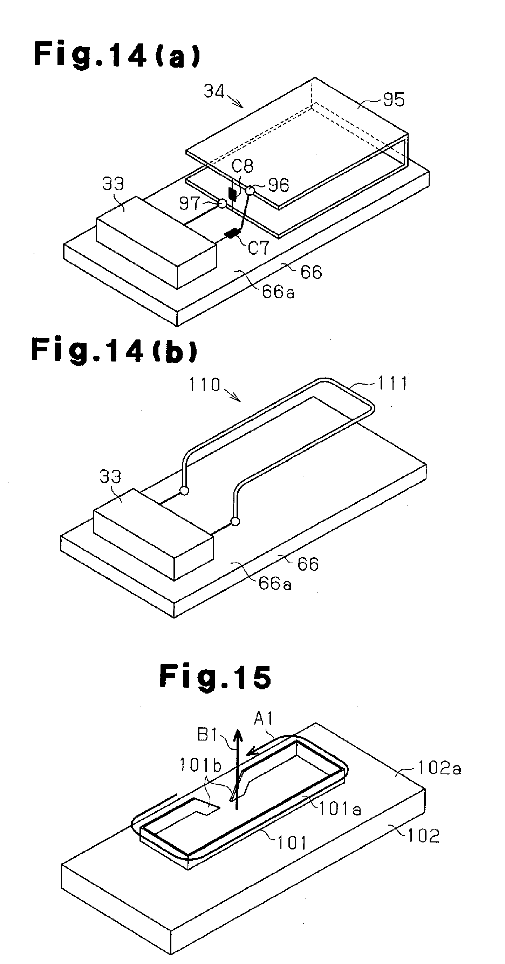

The transmitting portion 101a forms a loop in a plane parallel to the main surface 102a of the circuit board 102. Therefore, as indicated by arrow A1 in Fig. 15, a current along the longitudinal direction of the transmitting portion 101a forms a loop plane that is parallel to the main surface 102a. In other words, the transmitting portion 101a has a loop plane parallel to the main surface 102a. The direction of a magnetic field generated by such a current is perpendicular to the main surface102a as shown in arrow B1.

The surfaces of the belt-shaped conductor forming the loop antenna 101 are perpendicular to the main surface 102a of the circuit board 102. According to the publication No. 2003-347811, the configuration permit radio waves to be transmitted to the surroundings, and radio waves are reliably received by a reception antenna.

However, in the publication No. 2003-347811, the influence of the vehicle wheel on radio waves transmitted by the transmission antenna is not taken into consideration. That is, the transmitter is attached to the wheel, which is made of metal such as an aluminum alloy or iron, and the loop antenna 101 of the transmitter is located in a position close to the outer circumference of the wheel rim. The loop plane is substantially parallel to part of the outer circumference of the wheel rim that faces the transmitter. In this device, a current in the wheel rim induced by supplying electricity to the loop antenna 101 flows in a direction opposite to the direction of the current through the loop antenna 101. As a result, radio waves that cancel the radio waves transmitted by the loop antenna 101 are generated in the wheel rim. This reduces the radio wave transmission performance from the transmission antenna.

### SUMMARY OF THE INVENTION

Accordingly, it is an objective of the present invention to provide a transmitter for a tire condition monitoring apparatus and an antenna for the transmitter that suppress reduction of the efficiency of radio wave transmission efficiency when the transmitter is being used.

To achieve the foregoing and other objectives and in accordance with the purpose of the present invention, an antenna used in a transmitter of an apparatus for monitoring a condition of a tire of a vehicle is provided. The antenna includes a circuit board and a loop-shaped transmission conductor. The circuit board has a main surface. The loop-shaped transmission conductor is located on the main surface. The transmission conductor transmits a transmission signal including data that represents the condition of the tire as radio waves. The transmission conductor has a loop plane that is substantially perpendicular to the main surface of the circuit board.

The present invention also provides a transmitter of a tire condition monitoring apparatus for monitoring a condition of a tire of a vehicle. The transmitter includes a circuit board, a transmission circuit, and an antenna. The circuit board has a main surface. The transmission circuit is mounted on the main surface. The transmission circuit generates a transmission signal containing data that represents the tire condition. The antenna transmits the transmission signal as radio waves. The antenna includes a loop-shaped transmission conductor that transmits the radio waves and has a loop plane that is substantially perpendicular to the main surface of the circuit board.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a diagrammatic view showing a tire condition monitoring apparatus according to a first embodiment of the present invention;
Fig. 2 is a block diagram showing a transmitter of the tire condition monitoring apparatus shown in Fig. 1;
Fig. 3 is a cross-sectional view showing the transmitter of Fig. 2 attached to a wheel rim;
Fig. 4 is a cross-sectional view taken along line 4-4 of Fig. 3;
Fig. 5 is a perspective view illustrating a circuit unit provided in the transmitter shown in Fig. 4;
Fig. 6 is a diagrammatic view showing the transmission antenna and a circuit configuration for supplying electricity to the transmission antenna;
Fig. 7 is a perspective view illustrating a circuit unit having a transmission antenna according to a second embodiment of the present invention;
Fig. 8 is a perspective view illustrating a circuit unit having a transmission antenna according to a third embodiment of the present invention;
Fig. 9 is a front cross-sectional view illustrating a circuit unit having a transmission antenna according to a fourth embodiment of the present invention;
Fig. 10 is a front cross-sectional view illustrating a circuit unit having a transmission antenna according to a fifth embodiment of the present invention;
Fig. 11 is a front cross-sectional view illustrating a circuit unit having a transmission antenna according to a sixth embodiment of the present invention;
Fig. 12 is a diagrammatic view showing a circuit configuration in which the surface of a battery is used as a transmission conductor according to a seventh embodiment of the present invention;
Figs. 13(a) to 13(c) are diagrammatic views each showing the configuration of an impedance/frequency matching circuit;
Figs. 14(a) and 14(b) are perspective views showing comparison results of a transmission antenna of the present invention and a prior art transmission antenna; and
Fig. 15 is a perspective view illustrating a prior art transmission antenna.

### DETAILED DESCRIPTION OF THE PREFERRED EMBODIMENTS

A first embodiment of the present invention will now be described with reference to the drawings.

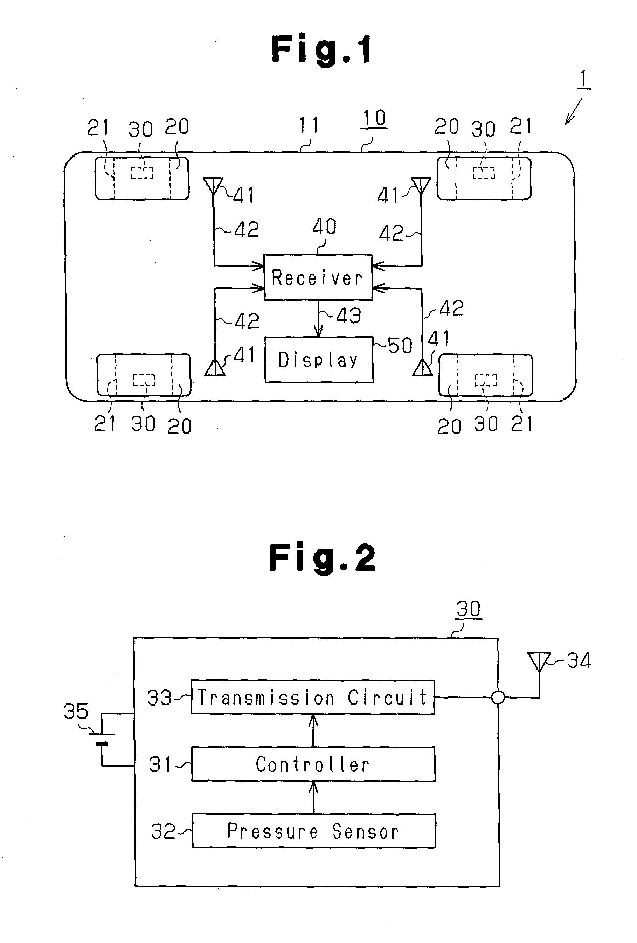

As shown in Fig. 1, the tire condition monitoring apparatus 1 includes four transmitters 30 and a single receiver 40. Each of the transmitters 30 is associated with a different one of four tires 20 of a vehicle 10. The receiver 40 is installed in a body frame 11 of the vehicle 10.

Each transmitter 30 is located in the corresponding tire 20 and is fixed to a wheel 21 of the tire 20. The wheels 21 are made of metal such as an aluminum alloy and iron. Each transmitter 30 measures the condition of the corresponding tire 20, that is, the internal pressure of the tire 20, and then wirelessly transmits a signal containing air pressure data.

The receiver 40 is located at a predetermined position on the body frame 11 and is activated by electricity of a battery (not shown) of the vehicle 10. The receiver 40 is connected to four reception antennas 41 with cables 42. Each reception antenna 41 corresponds to one of the tires 20. Each reception antenna 41 is located in a portion of the vehicle body frame 11 that is close to the corresponding tire 20, for example, in a wheel well. The receiver 40 receives the signal wirelessly transmitted by each transmitter 30 through the corresponding reception antenna 41.

A display 50 is located in the view of the driver of the vehicle 10, for example, in the passenger compartment. The display 50 is connected to the receiver 40 with a cable 43.

As shown in Fig. 2, each transmitter 30 includes a transmission controller 31, which is a microcomputer. The controller 31 includes, for example, a central processing unit (CPU), read only memory (ROM), and random access memory (RAM). A unique ID code is registered in an internal memory, for example, the ROM, of the controller 31. The ID code is used to distinguish the associated transmitter 30 from the other three transmitters 30.

Each tire pressure sensor 32, which functions as a tire condition sensor, measures the internal air pressure of the associated tire 20 and provides the controller 31 with pressure data, which is obtained from the measurement. The controller 31 sends data containing the air pressure data and the registered ID code to a transmission circuit 33. The transmission circuit 33 encodes and modulates the data sent from the controller 31, thereby generating a transmission signal. The transmission antenna 34 transmits the transmission signal as a radio wave. The transmission signal is a high frequency signal having a frequency of, for example, 315 MHz or 433 MHz.

Each transmitter 30 is provided with a battery 35. The transmitter 30 is driven by electricity of the battery 35.

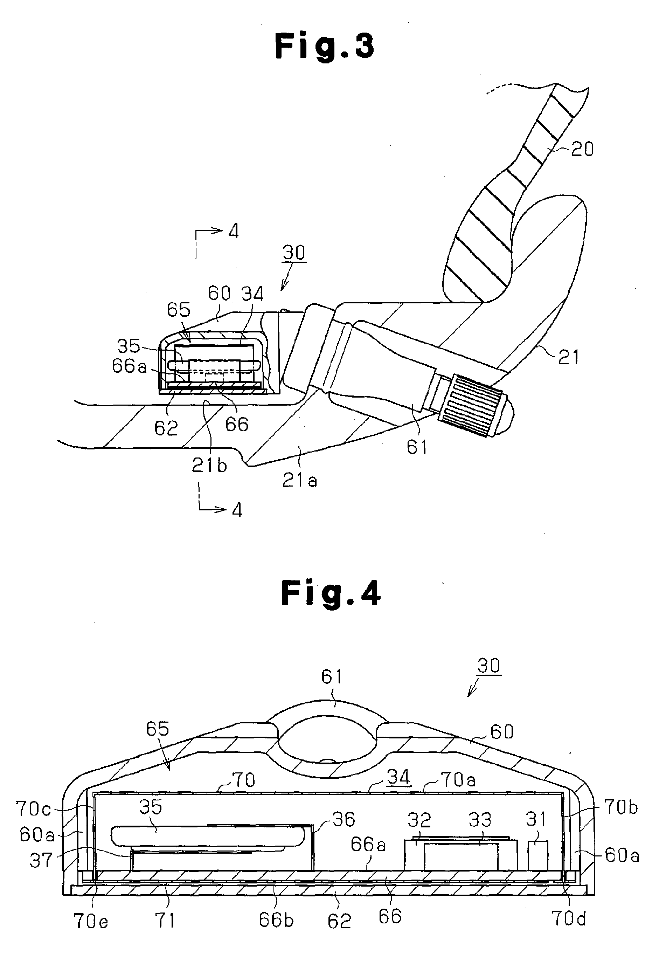

As shown in Figs. 3 and 4, each transmitter 30 has a casing 60 having an opening and a valve stem 61 extending from the casing 60. The opening of the casing 60 is closed with a lid 62. The casing 60 is located inside the associated tire 20, while the valve stem 61 extends through the rim 21a of the associated wheel 21 (wheel rim) and protrudes to the outside of the tire 20. The valve stem 61 includes an internal air passage (not shown), through which air is supplied to the interior of the tire 20.

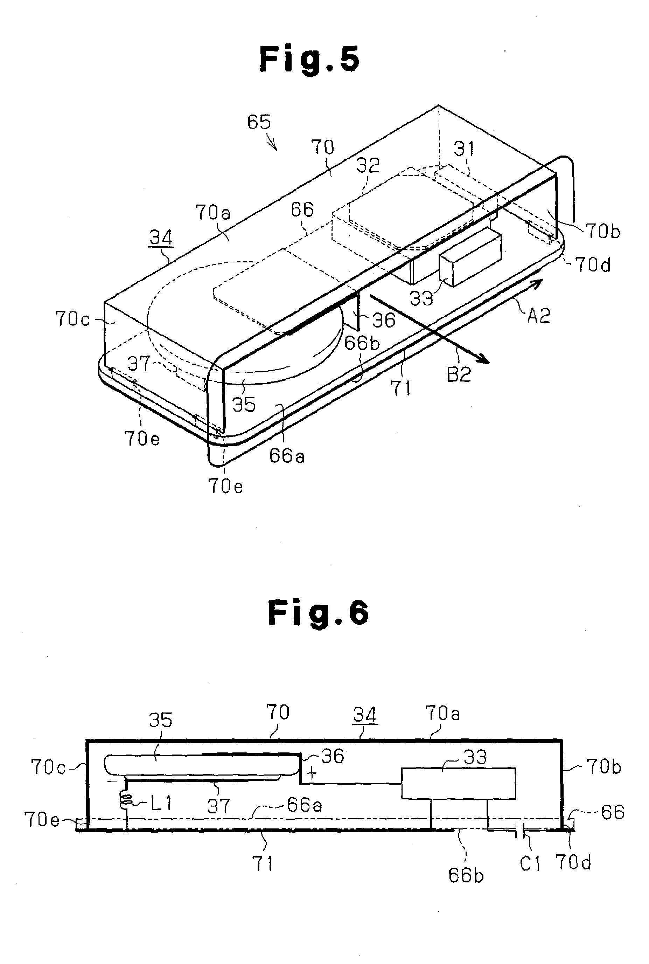

The casing 60 accommodates a circuit unit 65. As shown in Figs. 4 and 5, the circuit unit 65 includes a circuit board 66, circuit components (electronic components) mounted on the circuit board 66. The circuit components include the controller 31, the pressure sensor 32, and the transmission circuit 33, which are each formed as a chip. A surface of the circuit board 66 on which the circuit components are mounted is referred to as a first main surface 66a, while the opposite surface of the circuit board 66 is referred to as a second main surface 66b. The first main surface 66a is a mounting surface on which the circuit components 31, 32, 33 are mounted. The circuit unit 65 also includes the battery 35, which supplies electricity to the circuit components 31, 32, 33 on the circuit board 66. The battery 35 is mounted on the first main surface 66a of the circuit board 66 by means of a pair of terminal plates 36, 37.

The transmission antenna 34 is fixed to the circuit board 66 to form part of the circuit unit 65. The transmission antenna 34 includes a transmission conductor (transmission electrode) 70 located on the first main surface 66a of the circuit board 66. The transmission conductor 70 is formed by bending a plate made of metal such as phosphor bronze into a channel-shape. The transmission conductor 70 has a main plate portion 70a facing the first main surface 66a at a predetermined distance, and first and second leg portions 70b, 70c extending from the ends of the main plate portion 70a to the first main surface 66a. The main plate portion 70a is substantially parallel to the first main surface 66a. The leg portions 70b, 70c are substantially perpendicular to the first main surface 66a. At the distal end of each leg portion 70b, 70c, projections 70d, 70e are formed. The projections 70d, 70e extend through the circuit board 66. The transmission conductor 70 is fixed to the first main surface 66a to encompass the circuit components 31, 32, 33 on three sides.

A grounding conductor (grounding electrode) 71 is proved on the second main surface 66b of the circuit board 66. The grounding conductor 71 substantially covers the entire second main surface 66b. The projections 70e provided at the second leg portion 70c of the transmission conductor 70 are electrically connected to an end of the grounding conductor 71. That is, the grounding conductor 71 forms part of the transmission antenna 34. Like the transmission conductor 70 on the first main surface 66a, the grounding conductor 71 functions as a transmission conductor that transmits radio waves. Hereinafter, the grounding conductor 71 is referred to as transmission conductor as necessary. The circuit components 31, 32, 33 on the circuit board 66 are encompassed by the transmission conductors 70, 71 on four sides.

The surfaces of the components forming the circuit unit 65 are coated with a moisture-proof coating material. The opening of the casing 60 is closed with the lid 62 in a state where the circuit unit 65, which is coated with the coating material, is accommodated in the casing 60. A vent hole (not shown) is formed in the lid 62 or between the lid 62 and the casing 60 to guide air in the tire 20 to the pressure sensing surface of the pressure sensor. As shown in Fig. 4, support portions 60a are formed in the inner surface of the casing 60 along the opening of the casing 60 to support the circuit board 66. The support portions 60a receive the peripheral portions of the circuit board 66 so that the position of the circuit unit 65 is determined in the casing 60. A plurality of engaging portions for engaging with the peripheral portions of the circuit board 66 may be provided along the opening of the casing 60.

Fig. 6 shows a circuit configuration for supplying electricity to the transmission antenna 34. As shown in Fig. 6, the transmission circuit 33 is connected to the projections 70d formed at the first leg portion 70b of the transmission conductor 70 via a capacitor C1. The projections 70d function as feeding points that receive transmission signals (highfrequency signals) generated by the transmission circuit 33. The transmission circuit 33 is also connected to an end of the grounding conductor 71. The negative terminal plate 37 of the battery 35 is connected to the grounding conductor 71 via a coil L1. The coil L1 functions as a high frequency breaking element, and permits only direct-current component to pass through while breaking high frequencies, thereby separating the high frequency signals to be transmitted as radio waves from the direct current as drive current. When the projections 70d, which are feeding points, receive a transmission signal, current is flows in a loop along the transmission conductor 70 and the grounding conductor 71. Therefore, the transmission antenna 34 of this embodiment is a loop antenna having the transmission conductors 70, 71 forming a loop.

As shown in Figs. 5 and 6, the transmission conductors 70, 71 forms a loop in a plane that is substantially perpendicular to the main surfaces 66a, 66b of the circuit board 66. Therefore, as indicated by arrow A2 in Fig. 5, a loop current along the transmission conductors 70, 71 forms a loop plane that is substantially perpendicular to the main surfaces 66a, 66b. That is, the transmission conductors 70, 71 have a loop plane that is substantially perpendicular to the main surfaces 66a, 66b. Therefore, as indicated by arrow B2, the direction of a magnetic field generated by a current along the transmission conductors 70, 71 is substantially perpendicular to the loop plane and substantially parallel to the main surfaces 66a, 66b.

In a state where the transmitter 30 is attached to the wheel rim 21a as shown in Fig. 3, the circuit board 66 lies along the outer circumferential surface of the wheel rim 21a. The main surfaces 66a, 66b are substantially parallel to a section 21b the outer circumferential surface of the wheel rim 21a that faces the transmitter 30. Therefore, the loop plane is substantially perpendicular to the section 21b of the outer circumferential surface, and the direction of the magnetic field generated at the transmission conductors 70, 71 (refer to arrow B2 in Fig. 5) is substantially parallel to the section 21b. In such a case, the direction of a magnetic field generated due to reflection to the wheel rim 21a is the same as the direction of the magnetic field generated at the transmission conductors 70, 71. Therefore, even if the transmitter 30 is attached to the metal wheel 21, radio waves that hamper radio waves transmitted by the transmission antenna 34 are not generated.

The state where the loop plane is substantially perpendicular to the main surfaces 66a, 66b of the circuit board 66 includes not only a state where the loop plane is perfectly perpendicular to the main surfaces 66a, 66b, but also a state where the loop plane is close to the perpendicular state. Specifically, the loop plane may have any angle between 80 degrees and 100 degrees, inclusive, with respect to the main surfaces 66a, 66b.

This embodiment provides the following advantages.
(1) The transmission conductors 70, 71 of the transmission antenna 34 have a loop plane that is substantially perpendicular to the main surfaces 66a, 66b of the circuit board 66. Also, when the transmitter 30 is attached to the wheel rim 21a, the main surfaces 66a, 66b of the circuit board 66 are substantially parallel to the section 21b of the outer circumferential surface of the wheel rim 21a that faces the transmitter 30. Therefore, the loop plane is substantially perpendicular to the section 21b of the outer circumferential surface, and the direction of the magnetic field generated at the transmission conductors 70, 71 is substantially parallel to the section 21b.
   This configuration suppresses adverse effects of the metal wheel 21 to radio waves transmitted by the transmission antenna 34. Therefore, when the transmitter 30 is attached to the metal wheel 21, the radio wave transmission efficiency of the transmission antenna 34 is effectively prevented from being reduced. Thus, application of the transmission antenna 34 of this embodiment to the transmitter 30 of a tire condition monitoring apparatus is significantly advantageous.
   Also, since the radio wave transmission efficiency is prevented from being reduced, the drive current supplied from the battery 35 to the transmission circuit 33 may be reduced accordingly, while maintaining a sufficient radio wave power. This extends the life of the battery 35 to be extended and reduces the size of the battery 35. If the size of the battery 35 is reduced, the transmitter 30 can be made smaller and lighter.
(2) The transmission conductor 70, 71 are provided to encompass the circuit components 31, 32, 33 on the circuit board 66 and the battery 35. In other words, the circuit components 31, 32, 33 on the circuit board 66 are located within a current loop formed by the transmission conductors 70, 71, that is, in the loop plane. The transmission conductor 70 projects from the circuit board 66, and the circuit components 31, 32, 33 and the battery 35 are located in a space between the transmission conductor 70 and the circuit board 66. This permits the size of the circuit unit 65 to be reduced. Accordingly, the size of the transmitter 30 can be reduced.
(3) The grounding conductor 71 on the circuit board 66 forms part of the transmission antenna 34. That is, the grounding conductor 71, which is part of a conductor pattern on the circuit board 66, functions as a transmission conductor that transmits radio waves. Therefore, without adding a special ratio wave transmission conductor, the radio wave transmitting area is enlarged. Thus, without complicating the structure of the transmission antenna 34 or increasing the size of the transmission antenna 34, the radio wave transmission efficiency is improved.
(4) The transmission antenna 34 is a plate antenna, and has the plate-like transmission conductor 70 having a relatively large transmission surface. In addition, the transmission conductor 70, 71 substantially have the same width as that of the circuit board 66 and encompass the circuit board 66 and the components 31, 32, 33, 35 on the circuit board 66 on four sides. That is, the transmission conductors 70, 71 form the outer wall of the circuit unit 65 such that radio wave transmission surfaces are formed substantially on the four sides of the outer surface of the circuit unit 65. Further, the transmission conductor 70 is a thin plate, and the grounding conductor 71 is a foil that closely contacts the circuit board 66. This significantly increases the radio wave transmission efficiency while reducing the size of the circuit unit 65.

The above embodiment may be modified as follows.

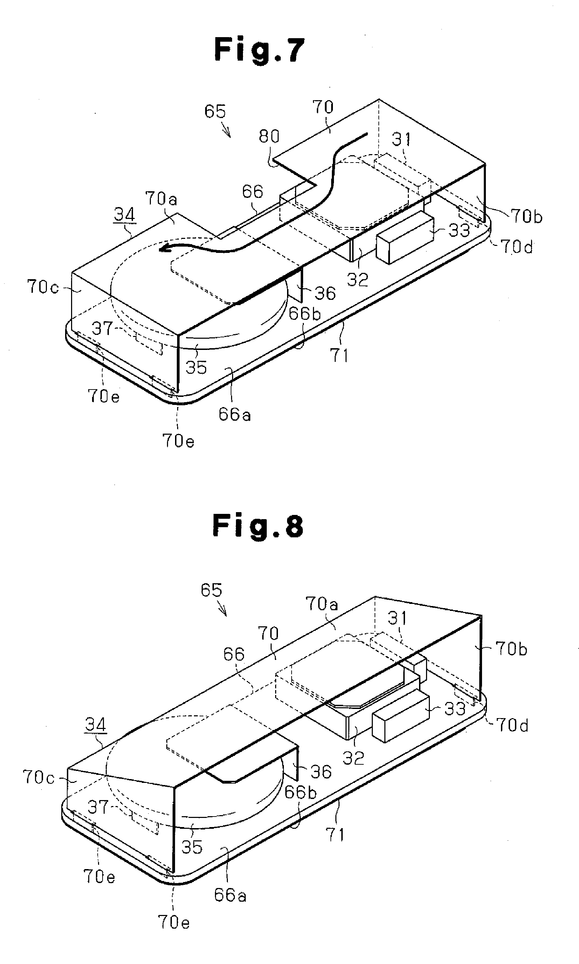

In a second embodiment shown in Fig. 7, a notch 80 is formed in the transmission conductor 70. Specifically, the notch 80 is formed in a center along the longitudinal direction of the main plate portion 70a of the transmission conductor 70. In this case, as indicated by an arrow in Fig. 7, current through the main plate portion 70a detours the notch 80, which increases the length of the current path and thus improves the radio wave transmission efficiency. Also, the size and the location of the notch 80 may be changed as necessary to appropriately adjust the radio wave transmission pattern. In stead of the notch 80, a slot may be formed.

In a third embodiment shown in Fig. 8, the main plate portion 70a of the transmission conductor 70 is inclined relative to the main surfaces 66a, 66b of the circuit board 66. In this case, the area of the main plate portion 70a is greater than that in Fig. 5, which improves the radio wave transmission efficiency. Also, the inclination angle of the main plate portion 70a may be changed as necessary to appropriately adjust the radio wave transmission pattern. Further, the notch 80 (or slot) of Fig. 7 may be formed in the inclined main plate portion 70a shown in Fig. 8. Alternatively, the main plate portion 70a may have a section that is parallel to the main surfaces 66a, 66b and a section that is inclined relative to the main surfaces 66a, 66b.

When reducing the size of the casing 60 of the transmitter 30, the shape of the transmission conductor shown in Fig. 5 may hamper the size from being reduced. In such a case, the transmission conductor 70 may have a shape selected from several shapes such as those shown in Figs. 7 and 8. This allows the size of the casing 60 to be reduced while avoiding interference between the casing 60 and the transmission conductor 70.

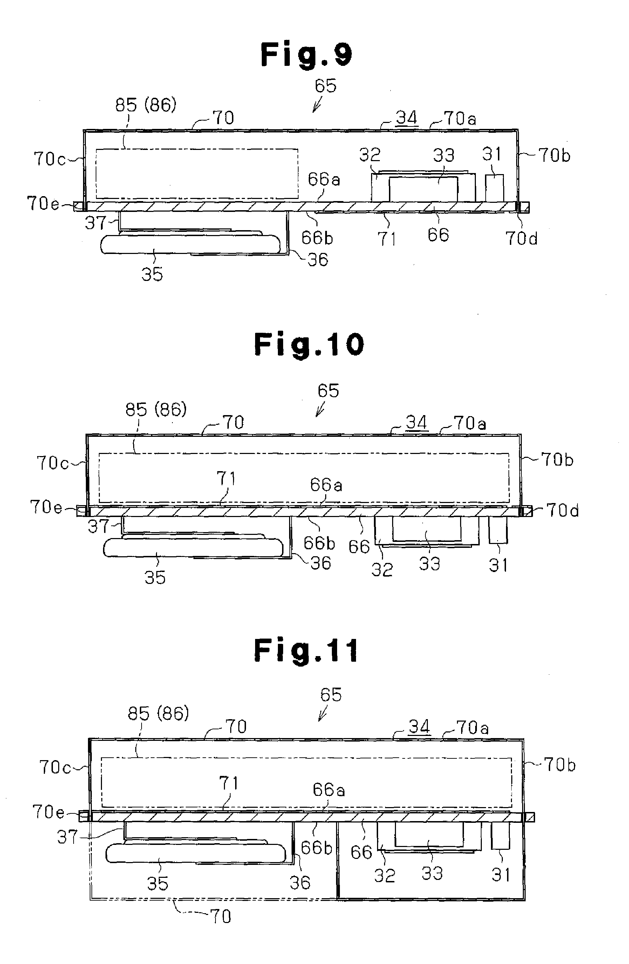

In a fourth embodiment shown in Fig. 9, the battery 35 and the terminal plates 36, 37 connected to the battery 35 are provided on the second main surface 66b of the circuit board 66. In this case, a dielectric 85 or a magnetic member 86 is preferably provided in the space between the transmission conductor 70 and the circuit board 66. The dielectric 85 and the magnetic member 86 may be soldered onto the first main surface 66a of the circuit board 66.

The dielectric 85 has a property to shorten the wavelength of radio waves. By providing the dielectric 85 having a proper dielectric constant in the loop current path in the transmission antenna 34, or in the loop plane, the size of the transmission antenna 34 is reduced while maintaining the radio wave transmission efficiency. When the magnetic member 86 is located in the loop current path in the transmission antenna 34 (loop plane), the size of the transmission antenna 34 can be reduced in inverse proportion to the permeability of the magnetic member 86. Also, it is also possible to appropriately adjust the transmission pattern of radio waves with the dielectric 85 and the magnetic member 86.

The dielectric 85 may be made of silicone resin or ceramic such as alumina. The magnetic member 86 may be made of NiZn or MnZn.

In the embodiment of Fig. 9, at least one of the circuit components including the controller 31, the pressure sensor 32, and the transmission circuit 33 may be provided on the second main surface 66b of the circuit board 66 instead of the battery 35.

In a fifth embodiment shown in Fig. 10, the battery 35 and the circuit components 31, 32, 33 are located on the second main surface 66b of the circuit board 66. Therefore, in this embodiment, the second main surface 66b of the circuit board 66 is a mounting surface, and the grounding conductor 71 is located on the first main surface 66a. In this case, it is preferable that an end of the grounding conductor 71 is connected to the transmission conductor 70 so that the grounding conductor 71 functions as a transmission conductor. Also, as in the embodiment of Fig. 9, a dielectric 85 or a magnetic member 86 is preferably provided in the space between the transmission conductor 70 and the circuit board 66.

In a sixth embodiment shown in Fig. 11, which is a modification of the embodiment shown in Fig. 10, the transmission conductor 70 on the first main surface 66a of the circuit board 66 extends to the second main surface 66b and encompasses the circuit components 31, 32, 33. As shown by alternate long and two short dashes lines in Fig. 11, the transmission conductor 70 may be extended to further encompass the battery 35.

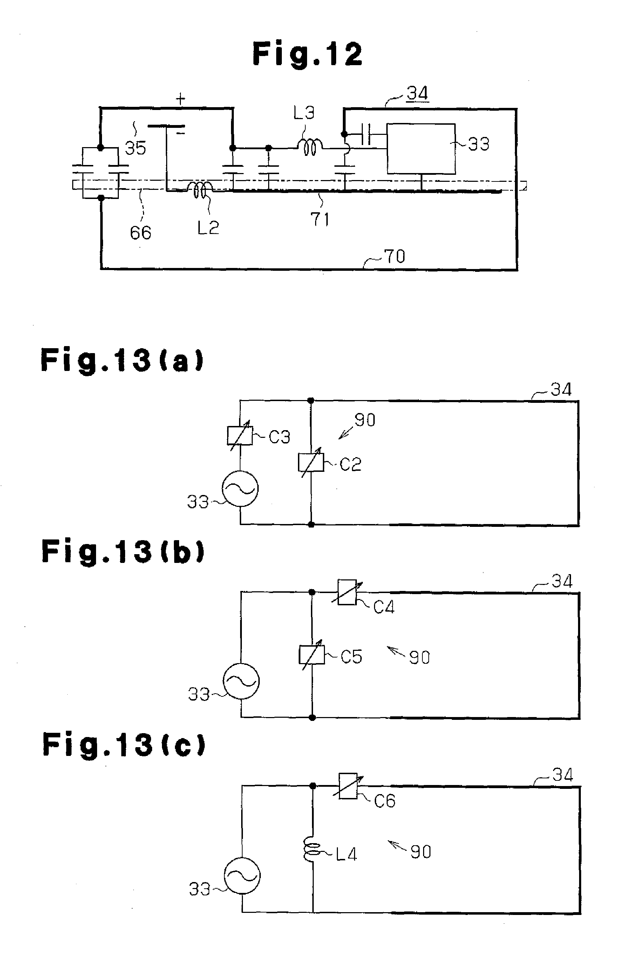

Fig. 12 is a circuit configuration of a seventh embodiment, which is a modification of the embodiment shown in Fig. 11. In the embodiment of Fig. 12, the metal surface of the battery 35 is used as a transmission conductor. As shown in Fig. 12, the positive terminal of the battery 35 is connected to the loop current path in the transmission antenna 34. The battery 35 is located in the loop plane. In this embodiment, the radio wave transmitting surface is increased using an existing component without adding a dedicated transmission conductor. Coils L2, L3 function as high frequency breaking elements, and permit only direct-current component to pass through while breaking high frequencies, thereby separating the high frequency signals to be transmitted as radio waves from the direct current as drive current.

The configuration where the surface of the battery 35 is used as a transmission conductor may be applied to any of the above illustrated embodiments.

Figs. 13(a) to 13(c) each show an example of impedance/frequency matching circuit (hereinafter, referred to as matching circuit) 90. Each matching circuit 90 adjusts the impedance of a transmission system including the transmission circuit 33 and the transmission antenna 34, and adjusts the transmission frequency. The matching circuit 90 includes a variable capacitance element such as a variable inductance or a varactor diode.

In the matching circuit 90 of Fig. 13(a), a variable capacitance element C2 is connected to the transmission circuit 33 in parallel. Also, a variable capacitance element C3 is connected to the transmission circuit 33 in series. The variable capacitance element C2 adjusts the transmission frequency, and the variable capacitance element C3 adjusts the impedance. In the matching circuit 90 of Fig. 13(b), a variable capacitance element C4 is connected to the transmission circuit 33 in series. Also, a variable capacitance element C5 is connected to the transmission circuit 33 in parallel. The variable capacitance element C4 adjusts the transmission frequency, and the variable capacitance element C5 adjusts the impedance. In the matching circuit 90 of Fig. 13(c), a variable capacitance element C6 is connected to the transmission circuit 33 in series. Also, a variable inductance L4 is connected to the transmission circuit 33 in parallel. The variable capacitance element C6 adjusts the transmission frequency, and the variable inductance L4 adjusts the impedance.

Each of the matching circuits 90 is effective for compensating for changes in the transmission output due to environment in which the transmitter 30 is used (the material and size of the wheel 21, the type and the temperature of the tire 20, and other factors).

Fig. 14(a) shows a transmission antenna 34 according to the present invention, and Fig. 14(b) shows a prior art transmission antenna 110. In the transmission antenna 34 shown in Fig. 14(a), a transmission conductor 95 made of a channel-shaped metal plate is provided on a first main surface 66a of the circuit board 66. The size of the circuit board 66 is length of 40 mm, width of 20 mm, and thickness of 1 mm. The sizes of the parallel upper and lower plate portions of the transmission conductor 95 are both length of 30 mm and width of 20 mm. In the transmission conductor 95, the size of a vertical plate portion connecting the upper and lower plate portions together is height of 3 mm and width of 20 mm. The transmission conductor 95 has a loop plane that is inclined by 90 degrees with respect to the first main surface 66a of the circuit board 66.

An end of the transmission conductor 95 is connected to the transmission circuit 33 on the circuit board 66 via a supply terminal (supply electrode) 96 and a first chip capacitor C7 for adjusting impedance. The other end of the transmission conductor 95 is connected to the transmission circuit 33 via a supply terminal (supply electrode) 97. The ends of the transmission conductor 95 are connected to each other via a second chip capacitor C8 for adjusting transmission frequency. The first capacitor C7 has 5 pF, and the second chip capacitor C8 has 18 pF.

On the other hand, in the transmission antenna 110 of Fig. 14(b), which is prepared for comparison, a transmission conductor 111 made of looped metal wire is provided on a circuit board 66, which is similar to the circuit board 66 of Fig. 14(a). The transmission conductor 111 forms a loop in a plane that is spaced from the first main surface 66a of the circuit board 66 by 3 mm and parallel to the first main surface 66a. The ends of the transmission conductor 111 are connected to the transmission circuit 33.

The transmission antenna 34 of Fig. 14(a) and the transmission antenna 110 of Fig. 14(b) were controlled to transmit radio waves of 315 MHz, and the transmission efficiency of radio waves was compared. As a result, in the case where the circuit boards 66 were not attached to wheel rims, the transmission efficiency of both transmission antennas 34, 110 was comparable 40%. However, in the case where the circuit boards 66 were attached to wheel rims, the transmission efficiency of the transmission antenna 34 of Fig. 14(a) was improved to 60%, while the transmission efficiency of the transmission antenna 110 of Fig. 14(b) was reduced to 3%. Accordingly, it is understood that radio wave transmission efficiency is improved by using the transmission antenna 34, which has the main surfaces 66a, 66b of the circuit board 66 substantially parallel to the wheel rim, and a loop plane substantially perpendicular to the main surfaces 66a, 66b of the circuit board 66.

It should be apparent to those skilled in the art that the present invention may be embodied in many other specific forms without departing from the spirit or scope of the invention. Particularly, it should be understood that the invention may be embodied in the following forms.

The loop shaped transmission conductor of the transmission antenna 34, or the loop shaped current path, is not limited to the ones illustrated in the embodiments. That is, the loop shaped transmission conductor (current path) does not need to be formed as a complete rectangular loop as shown in Fig. 5 as long as the transmission conductor includes at least three sides in the loop plane. For example in Fig. 5, the grounding conductor 71 does not need to function as a transmission conductor. In this case, the transmission conductor 70 forms a channel-shaped current path in the loop plane. Such a channel-shaped transmission conductor (current path) is included in the scope of loop shaped transmission conductor (current path). Other than this, U-shaped, circular, and ellipse transmission conductors are included in the scope of the loop shaped transmission conductor (current path).

On the second main surface 66b or the first main surface 66a of the circuit board 66, a power source conductor may be provided to be connected to the terminal plates 36, 37 of the battery 35. Since the power source conductor is relatively wide, the power source conductor may be used as a transmission conductor.

In the illustrated embodiments, the four reception antennas 41 are provided, and each antenna 41 corresponds to one of the tires 20. However, the number of the reception antennas 41 does not need to match the number of the tires 20 as long as at least one reception antenna 41 is provided.

In addition to or instead of the pressure sensors 32 functioning as tire condition sensors, temperature sensors for detecting the temperature in the tires 20 may be provided.

Therefore, the present examples and embodiments are to be considered as illustrative and not restrictive and the invention is not to be limited to the details given herein, but may be modified within the scope and equivalence of the appended claims.

## Claims

1. An antenna used in a transmitter of an apparatus for monitoring a condition of a tire of a vehicle, **characterized by**:
a circuit board having a main surface; and
a loop-shaped transmission conductor located on the main surface, wherein the transmission conductor transmits a transmission signal including data that represents the condition of the tire as radio waves, and wherein the transmission conductor has a loop plane that is substantially perpendicular to the main surface of the circuit board.

2. The antenna according to claim 1, **characterized in that** the loop plane has an angle between 80 degrees and 100 degrees, inclusive, with respect to the main surface of the circuit board.

3. The antenna according to claim 1 or 2, **characterized in that** a dielectric or a magnetic member is provided in the loop plane.

4. The antenna according to any one of claims 1 to 3, **characterized in that** a battery is provided in the loop plane.

5. The antenna according to any one of claims 1 to 4, **characterized in that** the transmission conductor includes a grounding conductor or a power source conductor formed on the circuit board.

6. A transmitter of a tire condition monitoring apparatus for monitoring a condition of a tire of a vehicle,
**characterized by**:
a circuit board having a main surface;
a transmission circuit mounted on the main surface, wherein the transmission circuit generates a transmission signal containing data that represents the tire condition; and
an antenna that transmits the transmission signal as radio waves, wherein the antenna includes a loop-shaped transmission conductor that transmits the radio waves and has a loop plane that is substantially perpendicular to the main surface of the circuit board.

7. The transmitter according to claim 6, **characterized in that** the loop plane has an angle between 80 degrees and 100 degrees, inclusive, with respect to the main surface of the circuit board.

8. The transmitter according to claim 6 or 7, **characterized in that** the transmission circuit is surrounded by the transmission conductor.

9. The transmitter according to claim 6 or 7, **characterized in that** a plurality of circuit components, which include the transmission circuit, are mounted on the circuit board, and wherein at least one of the circuit components is surrounded by the transmission conductor.

10. The transmitter according to any one of claims 6 to 9, **characterized in that** a battery for supplying drive current to the transmission circuit is provided on the circuit board, and wherein the battery is surrounded by the transmission conductor.

11. The transmitter according to any one of claims 6 to 10, **characterized in that** a dielectric or a magnetic member is provided to be surrounded by the transmission conductor.

12. The transmitter according to any one of claim 6 to 11, **characterized in that** the transmission conductor includes a plate-shaped conductor, and wherein the plate-shaped conductor has a portion that faces the main surface of the circuit board with a predetermined space in between.

13. The transmitter according to any one of claims 6 to 12, **characterized in that** the transmission conductor includes a grounding conductor formed on the circuit board.

14. The transmitter according to any one of claims 6 to 13, **characterized in that** the transmitter is attached to a wheel of the vehicle to face a circumferential surface of the wheel, and wherein, when the transmitter is attached to the wheel, the loop plane is substantially perpendicular to a portion of the circumferential surface of the wheel that faces the transmitter.
